# EUROPEAN PATENT APPLICATION

(11) **EP 4 607 058 A1**
(43) Date of publication of application: **27.08.2025**
(21) Application number: 24382183.2
(22) Date of filing: 21.02.2024
(51) Int. Cl.: F16G 15/06, F16G 13/12, F16B 39/04, B63B 21/04

(54) **MOORING SHACKLE**

(71) Applicant: Vicinay Marine Innovacion (AIE), 48940 Leioa (ES)
(72) Inventor: GARCIA AYUELA, Xabier, 48940 Leioa (ES); FERNANDEZ IBAÑEZ, Jonatan, 48940 Leioa (ES); ABRISKETA LOZANO, Nagore, 48940 Leioa (ES); ALTUZARRA MAESTRE, Jorge, 48940 Leioa (ES); MENA CORMENZANA, Alexander, 48940 Leioa (ES)
(74) Representative: Galbaian S.Coop.

(57) **Abstract**

Mooring shackle comprising a shackle body (100) and a shackle pin (200) for joining the shackle body (100) with a mooring chain (20), the shackle body (100) comprising a lower end (110) with apertures in which the shackle pin (200) having a through hole for receiving a locking pin (204) is arranged, and a securing nut (205) with a further through hole (206), the locking pin (204) passes through the through hole (206) of the securing nut (205) and the through hole of the shackle pin (200) blocking the shackle pin (200) and the securing nut (205), and the shackle pin (200) has a blocking device (207) for retaining the securing nut (205) between the shackle body (100) and said blocking device (207).

## Description

### TECHNICAL FIELD

The present invention relates to mooring shackles for attaching mooring chains.

### PRIOR ART

Floating structures have to be anchored to the seabed to prevent sea currents or atmospheric conditions from being able to move them from their location. Mooring chains attaching the floating structures to anchors which are arranged in the seabed are used for that purpose.

Mooring shackles are used to join mooring chains together. Generally, a mooring shackle comprises an "H", "D", or "Y" shaped shackle body and a shackle pin that joins the shackle body with a mooring chain, wherein the shackle pin is arranged in an installation position through apertures of the shackle body.

The connection between the mooring chain and the shackle must be secure to prevent accidental disconnection of the chain. There are different solutions to ensure a secure connection, but they are usually complex (see for example EP2551549A1, US2005276658A1, or US4423610A).

A simple solution to establish the connection is to employ a locking pin that passes through the shackle pin preventing its accidental disconnection from the shackle. For example, CN203486098U shows a mooring shackle comprising a shackle body and a shackle pin for joining the shackle body with a mooring chain. The shackle pin is arranged in an installation position through apertures of the lower end of the shackle body, and in said installation position, the second end of the shackle pin is retained by a securing nut and the locking pin passes through the shackle pin preventing accidental unscrewing of the nut.

### DISCLOSURE OF THE INVENTION

The object of the invention is to provide a mooring shackle, as defined in the claims.

The invention relates to mooring shackle comprising a shackle body and a shackle pin for joining the shackle body with a mooring chain. The shackle body comprises a lower end having a first leg with a first aperture and a second leg with a second aperture. The shackle pin is arranged in an installation position through the apertures of the lower end of the shackle body. The shackle pin comprises a first end and a second end partially protruding from the second aperture in the installed position. The second end of the shackle pin has a through hole for receiving a locking pin that passes through the shackle pin blocking the shackle pin in the installation position, and the mooring shackle further comprises a securing nut which in the installation position is arranged around the second end of the shackle pin. The securing nut has another through hole and the locking pin passes through the through hole of the securing nut and the through hole of the shackle pin blocking the shackle pin and the securing nut in the installation position, and the second end of the shackle pin has a blocking device for retaining the securing nut between the shackle body and said blocking device.

In this manner, the locking pin retains the securing nut together with the shackle pin, thereby establishing a first blocking of the shackle pin, while the blocking device retains the securing nut and thereby establishes a second blocking of the shackle pin. This provides a redundant blocking and ensures that the shackle pin does not move axially along its longitudinal axis, preventing accidentally release of the mooring chain.

These and other advantages and features of the invention will become apparent in view of the figures and the detailed description of the invention.

### DESCRIPTION OF THE DRAWINGS

Figure 1 shows an example of the mooring shackle of the invention joining two mooring chains.

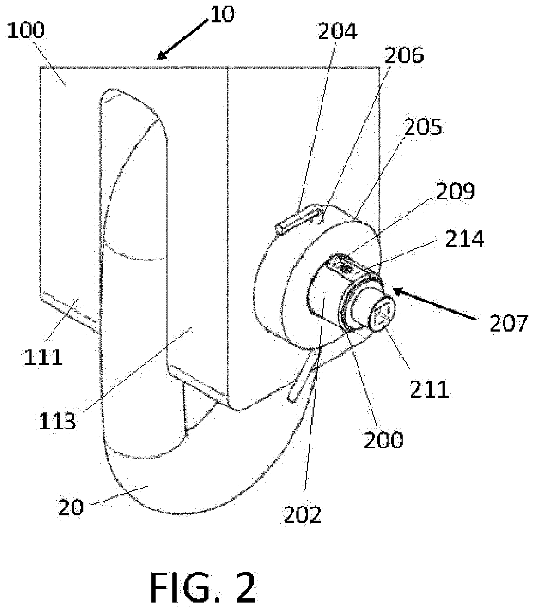

Figure 2 shows an enlarged detail of Figure 1 showing the blocking device of the shackle pin.
Figure 3 shows the mooring shackle of Figure 1 with the elements of the blocking device shown in exploded view.
Figure 4 shows a sectional view of the shackle pin in the installed position.
Figure 5 is an enlarged section view of the blocking device without being actuated and Figure 6 is an enlarged section view of the blocking device being actuated and retaining the securing nut.
Figure 7 shows a section view of the second end of the shackle pin in the installed position.

### DETAILED DISCLOSURE OF THE INVENTION

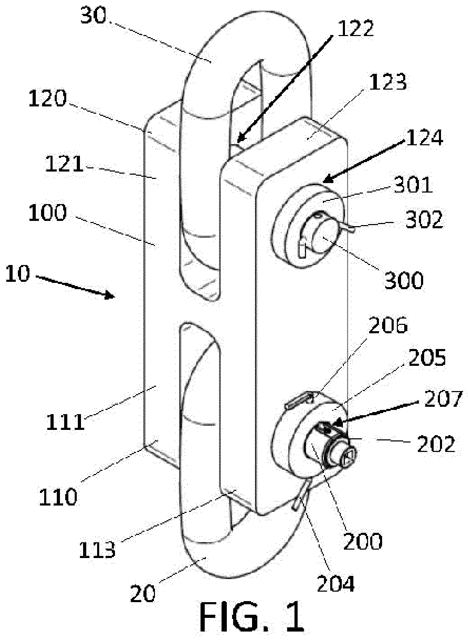

Figure 1 shows an example of a mooring shackle 10 comprising a shackle body 100 and a shackle pin 200 for joining the shackle body 100 with a mooring chain 20.

The shackle body 100 comprises a lower end 110 having a first leg 111 with a first aperture 112 and a second leg 113 with a second aperture 114. The shackle pin 200 is arranged in an installation position through the apertures 112 and 114 of the lower end 110 of the shackle body 100, joining the shackle body 100 with the mooring chain 20.

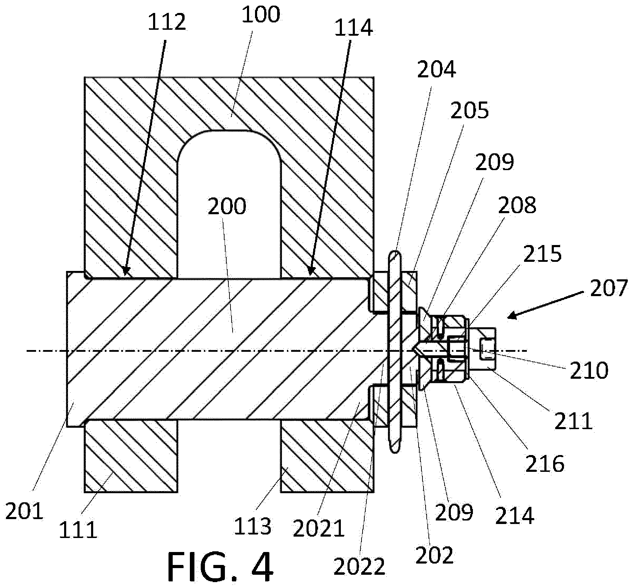

The shackle pin 200 comprises a first end 201 and a second end 202 partially protruding from the second aperture 114 in the installed position. In particular, in the installation position, the first end 201 of the shackle pin 200 is arranged in the first aperture 112 of the shackle body 100 and the second end 202 of the shackle pin 200 is arranged in the second aperture 114 of the shackle body 100 with the second end 202 partially protruding from the second aperture 114. The longitudinal axis of the shackle pin 200 longitudinally extends between the apertures 112 and 114 (see figure 4 showing the longitudinal axis represented by a dash-dotted line).

The second end 202 of the shackle pin 200 has a through hole 203 for receiving a locking pin 204 that passes through the shackle pin 200 blocking the shackle pin 200 in the installation position. So, the locking pin 204 prevents the shackle pin 200 from coming out of apertures 111 and 113 of the mooring shackle 10, and thus prevents the mooring chain 20 from being accidentally disconnected.

The mooring shackle 10 additionally comprises a securing nut 205 arranged around the second end 202 of the shackle pin 200 in the installation position. The securing nut 205 has another through hole 206 and the locking pin 204 passes through the through hole 206 of the securing nut 205 and the through hole 203 of the shackle pin 200 blocking the shackle pin 200 and the securing nut 205 in the installation position. Preferably, the through holes 203 and 206 are vertically aligned.

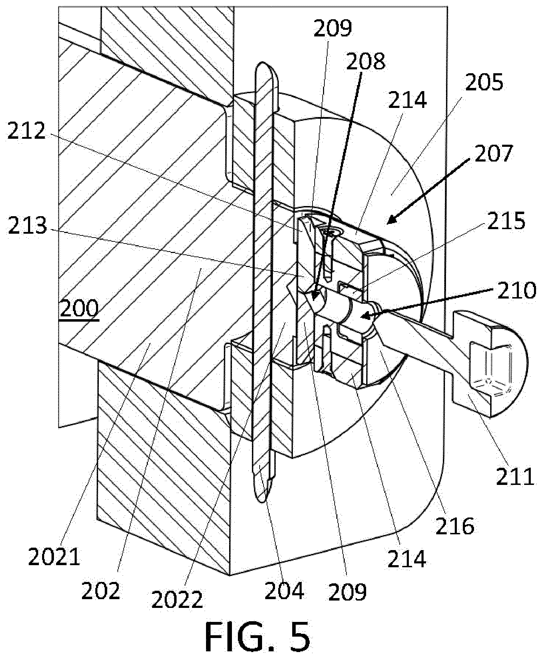

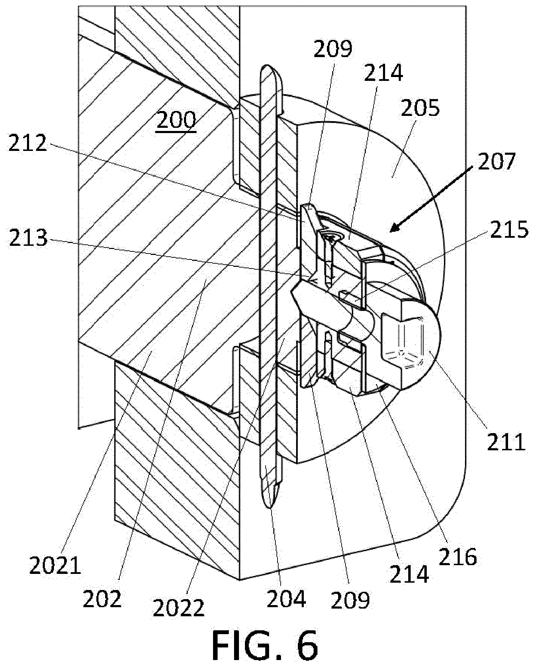

As seen in detail in Figures 4 to 6, the second end 202 of the shackle pin 200 has an inner portion 2021 which in the installed position is arranged in the second aperture 114 of the shackle body 100 and a protruding portion 2022 which protrudes from the second aperture 114. In the installed position, the securing nut 205 is arranged around the protruding portion 2022 of the second end 202 of the shackle pin 200 such that the securing nut 205 butts against the second leg 113 of the shackle body 100 preventing axial displacement of the shackle pin 200. In particular, the first end 201 of the shackle pin 200 butts against the outer face of the first leg 111 of the shackle body 100 and the securing nut 205 butts against the outer face of the second leg 113 of the shackle body 100.

Additionally, the second end 202 of the shackle pin 200 has a blocking device 207 for retaining the securing nut 205 between the shackle body 110 and said blocking device 207. In particular, the blocking device 207 is arranged in the protruding portion 2022 of the second end 202 of the shackle pin 200. More specifically, the securing nut 205 is retained between the second leg 113 of the shackle body 110 and the blocking device 207.

The locking pin 204 retains the securing nut 205 together with the shackle pin 200, thereby establishing a first blocking of the shackle pin 200, while the blocking device 207 retains the securing nut 205 and thereby establishes a second blocking of the shackle pin 200. This ensures that the shackle pin 200, in the installed position, does not move axially along its longitudinal axis.

The shackle body 100 may have an upper end 120 for joining another mooring chain 30, so the mooring shackle 10 joins two mooring chains 20 and 30. For example, a mooring chain 20 may be directly, or indirectly, connected to a floating structure at sea level and the other mooring chain 30 may be directly, or indirectly, connected to an anchor at the bottom of the sea.

The example of figures shows a mooring shackle 10 with a "H" shape. According to said example, the upper end 120 of the shackle body has a third leg 121 with a third aperture 122 and a fourth leg 123 with a fourth aperture 124 wherein a pin 300 is arranged through the apertures 122 and 124 of the upper end 120 of the shackle body 100, joining the shackle body 100 with the other mooring chain 30. The pin 300 may have a screw nut 301 for screwing the pin 300 and a locking pin 302 to prevent accidentally release of the screw nut 301. Alternatively, the mooring shackle 10 may be mooring shackle with a "D" or "Y" shape, but in all shapes, the shackle body 100 has a lower end 110 with the shackle pin 200 arranged in the apertures 112 and 114 of the legs 111 and 113 of the lower end 110.

As it can be shown in the example of the figures, and in particular in Figures 4 to 6, the blocking device 207 of the second end 202 of the shackle pin 200 has a housing 208 with at least one wedge 209, and a front aperture 210 connected with the housing 208 for receiving a screw 211. The screw 211 is shiftable between a first position where the wedge 209 is housed in the housing 208 of the second end 202 of the shackle pin 200 and a second position where the screw 211 moved the wedge 209 outwardly from the housing 208, such that the securing nut 205 is retained between the shackle body 100 and the wedge 209.

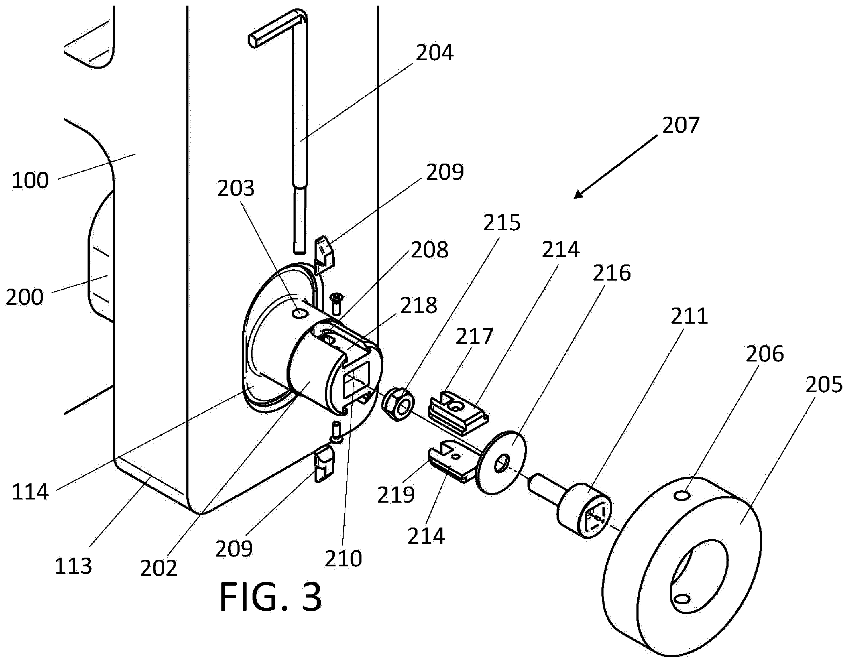

As seen in Figures 3 to 7, the wedge 209 has an upper part 212 and a lower part 213, the lower part 213 having a wedge section which is actuated by the screw 211 to move the wedge 209 towards the second position where the upper part 212 of the wedge 209 is outside the housing 208 to retain the securing nut 205. The screw 211 is moved between the first and second positions in a direction collinear to the longitudinal axis of the shackle pin 200, and the wedge 209 is moved by the screw 211 in a direction perpendicular to the longitudinal axis of the shackle pin 200. Preferably, the free end of the screw 211 has a surface corresponding to the wedge section of the lower part 213 of the wedge 209.

Preferably, as can be seen in the figures, the housing 208 of the shackle pin 200 has two wedges 209 facing each other at their lower parts 213 and symmetrically arranged within the housing 208. This ensures that contact between the wedges 209 and the securing nut 205 is established at diametrically opposite points of the securing nut 205, ensuring retention. The wedges 209 are guided in the housing 208 in the direction perpendicular to the longitudinal axis of the shackle pin 200, one upwards and the other downwards. Alternatively, the housing 208 may have more than two wedges 209 to improve retention of the securing nut 205, for example, three wedges 209 arranged at 120°, or four wedges 209 arranged at 90° and facing each other two by two.

The blocking device 207 of the second end 202 of the shackle pin 200 has stops 214 that contact the lower part 213 of the wedges 209 and limit the movement of the wedges 209 within the housing 208, such that in the second position the lower part 213 of the wedges 209 are retained in the housing 208 by the stops 208 and the upper part 212 of the wedges are outside the housing 208.

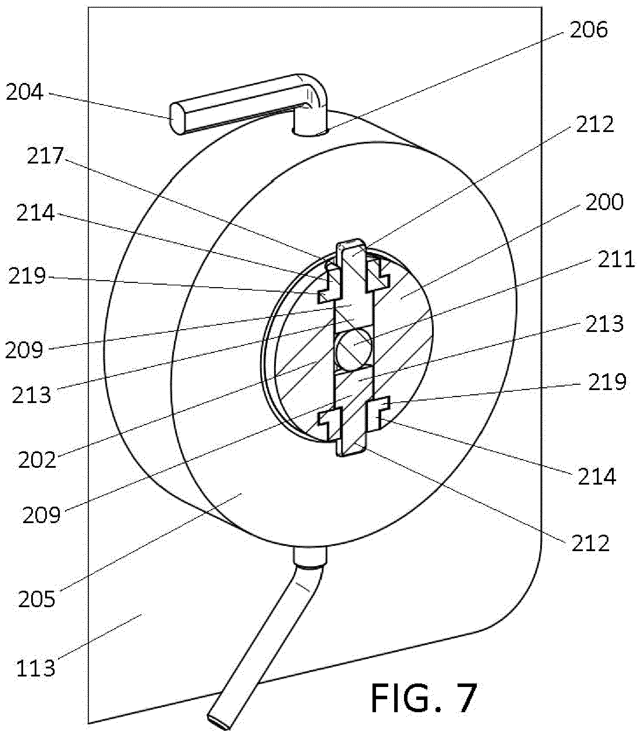

As seen in the section view of Figure 7, the lower part 213 of the wedges 209 is larger than the upper part 212, and the stops 214 have slots 217 sized to allow passage of the upper part 212 of the wedges 209 but prevent passage of the lower part 213.

As shown in Figure 3, the stops 214 fit into reciprocally located recesses 218 of the second end 202 of the shackle pin 200 and the stops 214 have a perimeter flange 219 that provides a guide for the stops 214 in the recesses 218 of the second end 202 of the shackle pin 200. The stops 214 are fixed to the shackle pin 200 by screws.

The front aperture 210 of the shackle pin 200 has a screw nut 215 for screwing the screw 211 between the first position and the second position. Preferably, the screw nut 215 is a self-locking screw nut to improve the performance of the threading in the underwater conditions in which it will work.

Preferably, the second end 202 of the shackle pin 200 has a washer 216 arranged between the front aperture 210 of the shackle pin 200 and the head of the screw 211.

Preferably, the wedge 209 is retained in the housing 208 of the second end 202 of the shackle pin 200 by a releasable pressure sensitive adhesive. In this way, the wedges 209 are prevented from being able to move in the housing 208 before they are actuated by the screw 211.

Preferably, the shackle pin 200 has a cross-section with an oblong shape matting the inner shape of the apertures 211 and 213 of the shackle body 100, preventing the shackle pin 200 from rotating in the installation position. Even more preferably, said cross-section with an oblong shape coincides with the inner shape of a link of the mooring chain 20, so the rotation of the shackle pin 200 and the rotation of the first link of the mooring chain 20 connect to the mooring shackle 10 is prevented. Alternatively, the shackle pin 200 may have a circular cross-section.

The procedure for joining the mooring chain 20 with the mooring shackle 10 comprises the following steps:
- arrange the first link of the mooring chain 20 between the legs 111 and 113 of the lower end 110 of the shackle body 100,
- insert the shackle pin 200 through the apertures 112 and 114 of the lower end 110 of the shackle body 100 into the installation position,
   ∘ for this purpose, the shackle pin 200 is inserted until the head of the first end 201 of the shackle pin 200 butts against the first leg 111 of the lower end 110 of the shackle body 100, with the second end 202 of the shackle pin 200 partially protruding from the second opening 114 of the lower end 110 of the shackle body 100,
- arrange the securing nut 205 around the second end 202 shackle pin 200,
- insert the locking pin 204 through the through hole 206 of the securing nut 205 and the through hole 203 of the shackle pin 200,
- activate the blocking device 207 to retain the securing nut 205 between the shackle body 100 and the blocking device 207,
   ∘ for this purpose, the screw 211 is moved between the first position, in which the wedge 209 is in the housing 208 of the second end 202 of the shackle pin 200, and the second position, in which the screw 211 displaces the wedge 209 outwards from the housing 208, so that the securing nut 205 is retained between the shackle body 100 and the wedge 209.

## Claims

1. Mooring shackle comprising a shackle body (100) and a shackle pin (200) for joining the shackle body (100) with a mooring chain (20), wherein the shackle body (100) comprises a lower end (110) having a first leg (111) with a first aperture (112) and a second leg (113) with a second aperture (114), the shackle pin (200) is arranged in an installation position through the apertures (112,114) of the lower end (110) of the shackle body (100), the shackle pin (200) comprises a first end (201) and a second end (202) partially protruding from the second aperture (114) in the installed position, the second end (202) of the shackle pin (200) has a through hole (203) for receiving a locking pin (204) that passes through the shackle pin (200) blocking the shackle pin (200) in the installation position, and wherein the mooring shackle (10) further comprises a securing nut (205) which in the installation position is arranged around the second end (202) of the shackle pin (200), **characterized in that** the securing nut (205) has another through hole (206) and the locking pin (204) passes through the through hole (206) of the securing nut (205) and the through hole (203) of the shackle pin (200) blocking the shackle pin (200) and the securing nut (205) in the installation position, and the second end (202) of the shackle pin (200) has a blocking device (207) for retaining the securing nut (205) between the shackle body (100) and said blocking device (207).

2. Mooring shackle according to claim 1, wherein the blocking device (207) of the second end (202) of the shackle pin (200) has a housing (208) with at least one wedge (209), and a front aperture (210) connected with the housing (208) for receiving a screw (211), the screw (211) being shiftable between a first position where the wedge (209) is housed in the housing (208) of the second end (202) of the shackle pin (200) and a second position where the screw (211) moved the wedge (209) outwardly from the housing (208), such that the securing nut (205) is retained between the shackle body (100) and the wedge (209).

3. Mooring shackle according to claim 2, wherein the wedge (209) has an upper part (212) and a lower part (213), the lower part (213) having a wedge section which is actuated by the screw (211) to move the wedge (209) towards the second position where the upper part (212) of the wedge (209) is outside the housing (208) to retain the securing nut (205).

4. Mooring shackle according to claim 3, wherein the housing (208) of the shackle pin (200) has two wedges (209) facing each other at their lower parts (213) and symmetrically arranged within the housing (208).

5. Mooring shackle according to claim 4, wherein the blocking device (207) of the second end (202) of the shackle pin (200) has stops (214) that contact the lower part (213) of the wedges (209) and limit the movement of the wedges (209) within the housing (208), such that in the second position the lower part (213) of the wedges (209) are retained in the housing (208) by the stops (208) and the upper part (212) of the wedges are outside the housing (208).

6. Mooring shackle according to claim 5, wherein the lower part (213) of the wedges (209) is larger than the upper part (212), and the stops (214) have slots (217) sized to allow passage of the upper part (212) of the wedges (209) but prevent passage of the lower part (213).

7. Mooring shackle according to any preceding claim 2 to 6, wherein the front aperture (210) of the shackle pin (200) has a screw nut (215) for screwing the screw (211) between the first position and the second position.

8. Mooring shackle according to preceding claim, wherein the screw nut (215) is a self-locking screw nut.

9. Mooring shackle according to any preceding claim 2 to 8, wherein the second end (202) of the shackle pin (200) has a washer (216) arranged between the front aperture (210) of the shackle pin (200) and the head of the screw (211).

10. Mooring shackle according to any preceding claim 2 to 9, wherein the wedge (209) is retained in the housing (208) of the second end (202) of the shackle pin (200) by a releasable pressure sensitive adhesive.

11. Mooring shackle according to any preceding claim, wherein the shackle pin (200) has a transverse section with an oblong shape matting the inner shape of the apertures (211,213) of the shackle body (100), preventing the shackle pin (200) from rotating in the installation position.
